# EUROPÄISCHE PATENTSCHRIFT

(11) **EP 3 764 738 B1**
(45) Veröffentlichungstag und Bekanntmachung des Hinweises auf die Patenterteilung: **07.02.2024**
(21) Anmeldenummer: 19185781.2
(22) Anmeldetag: 11.07.2019
(51) Int. Cl.: H05B 3/74, A47J 43/07

(54) **SPEISENZUBEREITUNGSGERÄT MIT PARALLEL GESCHALTETEN ELEKTRISCHEN KALTLEITERN**
FOOD PREPARATION DEVICE WITH PTC RESISTORS IN PARALLEL
APPAREIL DE PRÉPARATION D'ALIMENTS POURVU DE CONDUCTEURS ÉLECTRIQUES PTC À COMMUTATION PARALLÈLE

(43) Veröffentlichungstag der Anmeldung: 13.01.2021
(73) Patentinhaber: Vorwerk & Co. Interholding GmbH, 42270 Wuppertal (DE)
(72) Erfinder: Schmitz, Kevin, 40599 Düsseldorf (DE); Tietz, Sebastian, 51379 Leverkusen (DE)
(74) Vertreter: Gille Hrabal Partnerschaftsgesellschaft mbB Patentanwälte

(56) Entgegenhaltungen:
- WO-A1-91/02481
- WO-A1-98/19499
- DE-A1-102008 038 783

## Beschreibung

Die Erfindung betrifft ein Speisenzubereitungsgerät mit einer elektrischen Heizeinrichtung, die zumindest zwei elektrische Kaltleiter für ein Erhitzen einer Speise in einem Speisenzubereitungsraum umfasst, wobei die elektrischen Kaltleiter elektrisch parallel geschaltet sind.

Speisen werden für ihre Zubereitung regelmäßig erwärmt oder erhitzt. Dies geschieht beispielsweise mithilfe eines Herdes, der über wenigstens eine Heizplatte in Form einer Kochplatte verfügt. Eine Kochplatte ist eine Platte, die durch eine Heizeinrichtung erhitzt werden kann.

Eine Kochplatte kann kreisrund sein. Es kann sich aber auch um eine Platte handeln, die nur bereichsweise erhitzt werden kann. Es kann sich um ein oder mehrere kreisrunde Bereiche handeln, die erhitzt werden können. Durch Erhitzen der Platte oder eines Bereichs der Platte wird Wärme von der Platte zu einem darauf abgestelltem Kochgefäß zugeführt. Eine in dem Kochgefäß befindliche Speise kann dadurch erhitzt werden.

Aus der Druckschrift DE 10 019 126 A1 ist eine Küchenmaschine mit einem Rührgefäß und einem Antrieb für ein Rührwerk in dem Rührgefäß bekannt. An dem Boden des Rührgefäßes gibt es ein elektrisches Widerstandsheizelement mit auf einem Dielektrikum aufgebrachten Leiterbahnen. Durch Aufheizen des Bodens des Rührgefäßes kann eine Speise in dem Rührgefäß erhitzt werden. Das Rührgefäß dient also auch als Kochgefäß. Aus der WO 9819499 A1 ist ein Heizelement mit parallelen Heizleiterbahnen aus Kaltleitern bekannt. Die DE 10 2008 038 738 A1 zeigt eine Küchenmaschine mit konzentrisch angeordneten Heizabschnitten in einer Heizplatte.

Es wird angestrebt, einen Boden eines Kochgefäßes gleichmäßig zu erwärmen, um ein lokales Überhitzen einer Speise während ihrer Zubereitung zu vermeiden. Um dies zu erreichen, kann der Boden eines Kochgefäßes gut wärmeleitende Materialien wie Kupfer oder Aluminium umfassen, die als Wärmespreizschichten dienen. Dem Boden zugeführte Wärme soll durch die gut wärmeleitenden Materialien gleichmäßig verteilt werden. Ein Beispiel für ein solches Kochgefäß ist aus der Druckschrift DE 20 2004 007 542 U1 bekannt.

Wird ein Boden eines Kochgefäßes lokal überhitzt, so kann die Heizeinrichtung abgeschaltet werden, bis sich ein thermisches Gleichgewicht eingestellt hat. Ein Kochprozess wird dann entsprechend verzögert.

Durch ein Kochgefäß wird ein Raum für die Zubereitung einer Speise bereitgestellt. Ein solcher Raum wird daher nachfolgend Speisenzubereitungsraum genannt.

Backofen sowie Mikrowelle sind weitere Beispiele für Speisenzubereitungsgeräte. Ein Backofen oder eine Mikrowelle umfassen jeweils einen Raum, in dem Speisen erhitzt werden sollen. Ein solcher Raum ist ein Speisenzubereitungsraum im Sinne der vorliegenden Erfindung. Es wird auch bei solchen Speisenzubereitungsräumen angestrebt, Wärme gleichmäßig den darin befindlichen Speisen zuzuführen.

Mit der vorliegenden Erfindung wird das Ziel verfolgt, eine Speise in einem Speisenzubereitungsraum mit geringem technischem Aufwand schnell und zuverlässig zubereiten zu können.

Die Aufgabe der Erfindung wird durch den Gegenstand des Anspruchs 1 gelöst. Vorteilhafte Ausgestaltungen ergeben sich aus den abhängigen Ansprüchen. Die Erfindung kann darüber hinaus wie anhand der eingangs genannten Beispiele beschrieben ausgestaltet sein.

Das Ziel der vorliegenden Erfindung wird durch ein Speisenzubereitungsgerät erreicht, das mit einer elektrischen Heizeinrichtung versehen ist. Die Heizeinrichtung umfasst zumindest zwei elektrische Leiter für ein Erhitzen einer Speise in einem Speisenzubereitungsraum. Die elektrischen Leiter sind elektrisch parallel geschaltet. Die elektrischen Leiter sind elektrische Kaltleiter, die durch ein oder mehrere elektrische Brücken miteinander elektrisch verbunden sind.

Ein Kaltleiter im Sinne der vorliegenden Erfindung weist einen positiven Temperaturkoeffizienten auf. Dies bedeutet, dass der elektrische Widerstand des Kaltleiters mit zunehmender Temperatur steigt.

Eine an die Kaltleiter angelegte elektrische Spannung ist aufgrund der Parallelschaltung bei jedem Kaltleiter gleich groß. Weisen die Kaltleiter unterschiedliche elektrische Widerstände auf, so entstehen unterschiedliche elektrische Teilströme. Die elektrischen Teilströme verhalten sich umgekehrt zu den jeweiligen Widerständen. In einem Kaltleiter mit einem hochohmigen Widerstand fließt ein relativ kleiner elektrischer Strom. In einem Kaltleiter mit einem niederohmigen Widerstand fließt ein relativ hoher elektrischer Strom.

Zusätzlich zur Parallelschaltung gibt es ein oder mehrere elektrische Brücken. Eine jede elektrische Brücke ist ein elektrischer Leiter, der einen Kaltleiter elektrisch mit zumindest einem dazu parallel geschalteten elektrischen Kaltleiter verbindet. Dies hat zur Folge, dass sich ein Teilstrom, der durch einen Kaltleiter fließt, verändern kann. Da dies zumindest auch in Abhängigkeit von der Temperatur geschieht, können überhitzte lokale Bereiche vermieden werden, ohne dafür eine separate Steuerung vorsehen zu müssen. Umgekehrt werden lokal kühle Bereiche zwangsläufig stärker erhitzt. Es lassen sich daher schnell und zuverlässig gute Kochergebnisse erzielen.

Die elektrisch parallel geschalteten Kaltleiter sind in einer Ausgestaltung in einer Platte angeordnet. Diese sind dann in die Platte integriert. Die elektrisch parallel geschalteten Kaltleiter können alternativ unterhalb einer Platte angebracht sein. Die Platte kann ein Boden oder eine Wand eines Speisenzubereitungsraums sein. Alternativ kann die Platte Teil einer Kochplatte sein, auf der ein Gefäß für die Zubereitung einer Speise abgestellt werden kann. Durch diese Ausgestaltung wird sichergestellt, dass die Kaltleiter an den Bereich angrenzen, in dem eine Speise für eine Zubereitung vorhanden sein kann. Kochergebnisse können weiter verbessert werden.

Vorteilhaft ist der Temperaturkoeffizient einer elektrischen Brücke in einer Ausgestaltung der Erfindung kleiner als der Temperaturkoeffizient der parallel geschalteten elektrischen Kaltleiter. Der Temperaturkoeffizient einer elektrischen Brücke kann kleiner oder gleich Null sein. Ist ein Temperaturkoeffizient kleiner als Null, so verringert sich der elektrische Widerstand mit zunehmender Temperatur. Ist ein Temperaturkoeffizient gleich Null, verändert sich der elektrische Widerstand nicht in Abhängigkeit von der Temperatur. Es wird dadurch weiter verbessert erreicht, dass sich Teilströme günstig auf die elektrischen Kaltleiter verteilen, um Temperaturungleichgewichte bei einer Speise während ihrer Zubereitung zu vermeiden. Kochergebnisse können entsprechend schnell und zuverlässig verbessert werden.

Der elektrische Widerstand einer elektrischen Brücke ist bei gleicher Temperatur vorteilhaft kleiner als der elektrische Widerstand eines Abschnitts eines elektrischen Kaltleiters zwischen der elektrischen Brücke und einer benachbarten elektrischen Brücke. Es wird dadurch weiter verbessert erreicht, dass sich Teilströme günstig auf die elektrischen Kaltleiter verteilen, um gute Kochergebnisse schnell und zuverlässig zu erhalten.

In einer Ausgestaltung umfasst die elektrische Heizeinrichtung wenigstens drei oder vier parallel geschaltete elektrische Kaltleiter. Es können aber auch mehr als vier parallel geschaltete elektrische Kaltleiter vorhanden sein, so zum Beispiel wenigstens zehn oder wenigstens zwanzig parallel geschaltete elektrische Kaltleiter. Ein jeder elektrische Kaltleiter ist dann mit wenigstens einem weiteren elektrischen Kaltleiter auch über eine elektrische Brücke elektrisch verbunden. Vorzugsweise verbindet eine jede elektrische Brücke sämtliche parallel geschalteten elektrischen Kaltleiter.

Die parallel geschalteten elektrischen Kaltleiter sind vorzugsweise Widerstandsheizleiter für ein Erhitzen einer Speise. Durch die Kaltleiter wird also dann hinreichend Wärme erzeugt, die für ein Erhitzen einer Speise eingesetzt werden kann und soll. Abschnitte eines jeden elektrischen Kaltleiters können aber auch beispielsweise alternativ oder ergänzend ein anderes elektrisches Heizelement umfassen, um durch das andere elektrische Heizelement alternativ oder ergänzend Wärme zu erzeugen. Das andere elektrische Heizelement wird dann über den Kaltleiter mit elektrischem Strom versorgt. Ein solcher Abschnitt wird durch zumindest eine Brücke begrenzt, die diesen elektrischen Kaltleiter mit einem weiteren, dazu parallel geschalteten elektrischen Kaltleiter verbindet.

Die parallel geschalteten elektrischen Kaltleiter verlaufen in einer Ausgestaltung vollständig oder überwiegend räumlich parallel zueinander. Dadurch kann weiter verbessert ein gutes Kochergebnis schnell und zuverlässig erzielt werden.

Die elektrischen Widerstände der parallel geschalteten elektrischen Kaltleiter sind bei gleicher Temperatur, beispielsweise bei Raumtemperatur, gleich groß. Hierdurch kann erreicht werden, dass pro Längeneinheit ein jeder elektrischer Kaltleiter eine gleiche Wärmeleistung erzeugen kann. Dies gilt vor allem dann, wenn die Kaltleiter ansonsten gleich sind, also aus dem gleichen Material bestehen und gleich Querschnitte aufweisen. Dadurch kann weiter verbessert ein gutes Kochergebnis schnell und zuverlässig erzielt werden.

Die parallel geschalteten elektrischen Kaltleiter können gleich lang sein, um weiter verbessert ein gutes Kochergebnis schnell und zuverlässig erzielen zu können.

Es kann eine Mehrzahl von elektrischen Brücken vorhanden sein, die untereinander gleiche Abstände aufweisen. Dadurch kann ein Kochergebnis weiter verbessert werden.

Die parallel geschalteten elektrischen Kaltleiter können überwiegend entlang einer Kreisbahn verlaufen. Diese Ausgestaltung ist zur Lösung der Aufgabe der Erfindung von Vorteil, wenn ein kreisrunder Boden eines Speisenzubereitungsgefäßes erhitzt werden soll.

Parallel geschaltete elektrische Kaltleiter können unterschiedlich lange Schlaufen umfassen und darüber hinaus zum Beispiel räumlich parallel zueinander in einer anderen Form verlaufen. Dies kann so geschehen, dass Hitze möglichst gleichmäßig verteilt erzeugt werden kann. Dadurch kann ein Kochergebnis weiter verbessert werden.

Abstände zwischen parallel geschalteten, benachbarten elektrischen Kaltleitern können gleich groß sein. Insbesondere bei dieser Ausführungsform ist es von Vorteil, beispielsweise mithilfe von Schlaufen zu erreichen, dass ein jeder Kaltleiter die gleiche Wärme pro Längeneinheit erzeugen kann, um Wärme geeignet verteilt erzeugen zu können. Ein Kochergebnis kann so weiter verbessert werden. Im Bereich der Schlaufen können die Kaltleiter dann unterschiedliche Abstände zueinander aufweisen.

Abstände zwischen parallel geschalteten, zumindest überwiegend kreisförmig verlaufenden, benachbarten elektrischen Kaltleitern können von innen nach außen abnehmen. Dies kann so geschehen, dass Hitze möglichst gleichmäßig verteilt erzeugt werden kann. Ein Kochergebnis kann so weiter verbessert werden.

Querschnitte der Kaltleiter können sich unterscheiden, um so die Größe der elektrischen Teilströme zu steuern, der durch die Kaltleiter fließt. Dies kann dazu genutzt werden, um gleichmäßig verteilt Wärme erzeugen zu können. So kann der Querschnitt von Kaltleitern von innen nach außen zunehmen, wenn Kaltleiter entlang einer Kreisbahn verlaufen. Ein Kochergebnis kann so weiter verbessert werden.

Das Speisenzubereitungsgerät kann eine Küchenmaschine sein, die einen Topf für ein Zubereiten einer Speise in dem Topf umfasst. Die Küchenmaschine kann ein Mixwerkzeug für ein Mischen einer Speise und/oder eine Waage für ein Ermitteln eines Gewichts einer Speise umfassen.

Das Speisenzubereitungsgerät kann aber auch ein Herd, ein Backofen oder eine Mikrowelle sein.

Der Boden eines Kochgefäßes kann die elektrisch parallel geschalteten Kaltleiter umfassen. Eine Küchenmaschine kann das Kochgefäß umfassen. Das Kochgefäß kann zugleich der Behälter sein, in dem Zutaten für Speisen gemischt und/oder zerkleinert und/oder gewogen werden können.

Das erfindungsgemäße Prinzip kann auch auf induktiv wirkende Heizelemente oder Mikrowellengeneratoren angewendet werden. So kann eine Mehrzahl von Spulen vorgesehen sein, um induktiv ein Gefäß oder die Speise unmittelbar mit Mikrowellen zu erhitzen.

Durch die Erfindung kann ein Anbrennen von Lebensmitteln durch automatische Umverteilung von elektrischem Strom vermieden werden. Durch die Erfindung wird gezielt Wärme an kalten Stellen erzeugt, wodurch Hotspots inhärent vermieden werden.

Die Erfindung kann beispielsweise eine gleichmäßige Temperaturverteilung auf einer Heizplatte ermöglichen. Auf diese Weise kann das Anbrennen von Speisen vermieden werden und die Aufheizdauer durch einen gleichmäßigeren Wärmeeintrag ins Gargut, also in die Speise, reduziert werden. Dies ist ohne zusätzliche elektrische Anschlüsse, Regelung oder gar Schalter möglich und völlig selbstregulierend. Es sind dafür keine zusätzlichen Bauteile erforderlich, was den Bauraum sowie den Herstellungsaufwand gering hält.

Der zentrale Unterschied zu bestehenden Systemen mit Wärmespreizschichten ist, dass erfindungsgemäß die Umverteilung vor der Umwandlung von elektrischer in thermische Energie erfolgt. Hierdurch kann das dynamische Ansprechverhalten erheblich verbessert werden. Es entsteht kein zusätzlicher technischer Aufwand für besonders gut wärmeleitende Materialien. Es kann im Vergleich zu bewährten anderen Lösungen der Einsatz von Palladium vorteilhaft reduziert werden, denn das Reduzieren von dem Legierungsbestandteil Palladium im Heizleiter begünstigt für das vorgeschlagene System sogar die elektrische Umverteilung. Sind die parallel geschalteten elektrischen Kaltleiter in einen Topf einer Küchenmaschine integriert, so wird die Ergonomie des Topfes nicht durch ein zu großes Gewicht negativ beeinflusst.

Die Erfindung nutzt den PTC-Effekt eines stromdurchflossenen Heizleiters, also den zunehmenden elektrischen Widerstand mit zunehmender Temperatur, um gezielt elektrischen Strom geeignet umzuverteilen. Die parallel geschalteten elektrischen Kaltleiter können in konzentrische Ringe in Form von Leiterbahnen aufgeteilt sein und können dann dazu dienen, eine Heizplatte gleichmäßig aufzuheizen.

Wenn sich keine Wärmeblockaden (beispielsweise aufgrund von angebrannten Gargütern) auf der Heizplatte befinden, teilt sich der elektrische Strom gemäß der Widerstände der konzentrischen Leiterbahnen, also der elektrischen Kaltleiter, auf. Hierzu können die elektrischen Kaltleiter geometrisch (Querschnitt und Länge) so ausgelegt sein, dass eine definierte Wärmestromdichte (Leistung pro Fläche) über dem Radius der Heizplatte eingestellt wird (z. B. konstante Wärmestromdichte). In den Strom durchflossenen elektrischen Kaltleitern kann Wärme entstehen, die zu einem Anstieg der Temperatur einer Heizplatte führen kann.

Befinden sich nun eine oder mehrere Wärmeblockaden auf der Heizplatte, die lokale Temperaturspitzen zur Folge haben, steigt der Widerstand im entsprechenden Abschnitt eines elektrischen Kaltleiters im entsprechenden Bereich der Heizplatte an. Dies führt aufgrund des PTC-Effekts zu einem Anstieg des elektrischen Widerstands, was zu einer automatischen Umleitung des Stroms zu kälteren Stellen führt. Hierzu sind die konzentrischen Leiterbahnen, d. h. die elektrischen Kaltleiter, an mehreren Stellen über den Umfang durch elektrisch gut leitende Brücken miteinander verbunden. Über diese weicht der Strom, der den Weg des geringsten Widerstandes nimmt, aus und verteilt sich auf andere, nicht blockierte Leiterbahnen, also elektrische Kaltleiter. Dort ist aufgrund der geringeren Temperatur der elektrische Widerstand kleiner. Der umverteilte Strom erzeugt an den kälteren Bereichen neben der Wärmeblockade eine Erwärmung. Die heißeren Stellen können dagegen abkühlen. Es erfolgt somit ein Temperaturausgleich.

Neben der Anzahl, Anordnung, Geometrie und dem Material der Leiterbahnen, also der elektrischen Kaltleiter, und ihrem Abstand zueinander können selbige Parameter der Brücken mit dem Ziel variiert werden, eine gleichmäßige Temperaturverteilung in allen Betriebspunkten zu erreichen, um gute Kochergebnisse schnell und zuverlässig zu erzielen.

Durch die Erfindung wird ein selbstregulierendes System geschaffen, das Wärme vorrangig an kalten Stellen erzeugt. Für den Betrieb des selbstregulierenden Systems werden nur zwei elektrische Kontakte benötigt. Das selbstregulierende System kann in einem Dickschichtverfahren hergestellt werden kann. Der primäre Effekt besteht nicht darin, dass Wärme erst umgeleitet werden muss, sondern dass die Position der Wärmeerzeugung angepasst wird. Eine aktive Regelung wird nicht benötigt. Es sind keine Schaltelemente oder Aktuatoren an der Regulierung beteiligt. Eine einfache Umsetzung ohne zusätzlichen Materialeinsatz, zum Beispiel Kupfer, ist möglich. Im Vergleich zu Systemen mit hoher Wärmekapazität ist die Dynamik höher. Auf ungünstige Materialien wie Palladium, durch die ein PTC Effekt vermieden werden soll kann verzichtet werden und zwar zumindest in Bezug auf die Kaltleiter. Vor allem diese umfassen also vorzugsweise kein Palladium.

Nachfolgend werden Ausführungsbeispiele der Erfindung näher erläutert.

Es zeigen
- Figur 1:: Heizplatte einer ersten Ausführungsform;
- Figur 2:: Heizplatte einer zweiten Ausführungsform;
- Figur 3: Heizplatte einer dritten Ausführungsform;
- Figur 4:: Heizplatte einer vierten Ausführungsform.

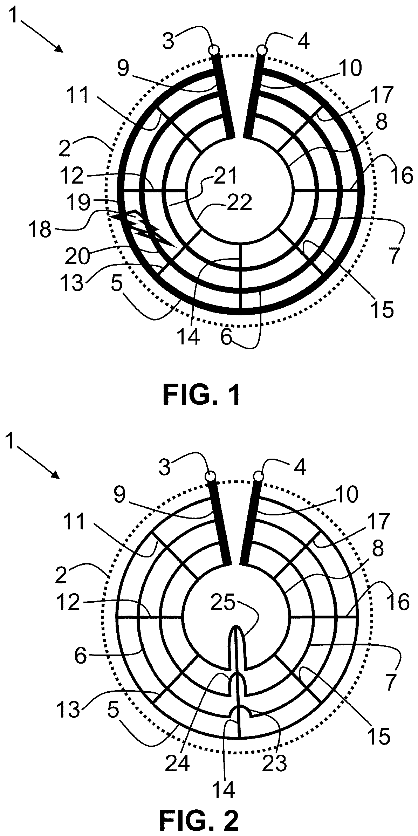

Die Figur 1 zeigt eine Heizplatte 1 eines Speisenzubereitungsgeräts. Das Speisenzubereitungsgerät kann ein Herd oder eine Küchenmaschine sein. Die Heizplatte kann eine Kochplatte oder der Boden eines Gefäßes bzw. Topfes sein, in dem eine Speise zubereitet werden kann. Die Heizplatte 1 umfasst eine Platte 2, die wie in der Figur 1 gezeigt kreisrund sein kann. Die Platte 2 kann aber beispielsweise auch rechteckig sein. Die Platte 2 kann beispielsweise ganz oder überwiegend aus einer Keramik, aus Glas und/oder aus Metall bestehen. Die Heizplatte 1 umfasst eine elektrische Heizeinrichtung mit zwei elektrischen Anschlüssen 3 und 4. An den einen elektrischen Anschluss 3 kann beispielsweise der Pluspol einer elektrischen Gleichstromquelle angeschlossen werden oder sein. An den anderen elektrischen Anschluss 4 kann dann der Minuspol der elektrischen Gleichstromquelle angeschlossen werden oder sein. Die elektrischen Anschlüsse 3, 4 bestehen in der Regel aus Metall, so zum Beispiel vollständig oder überwiegend aus Kupfer, Aluminium oder Stahl. Die elektrische Heizeinrichtung umfasst eine Mehrzahl von Kaltleitern 5, 6, 7 und 8, also beispielweise aus Metall bestehende elektrische Leiter mit einem positiven Temperaturkoeffizienten. Die Kaltleiter 5, 6, 7, 8 können beispielsweise vollständig oder überwiegend aus Kupfer, Aluminium und/oder Eisen bestehen. Fließt durch die Kaltleiter 5 bis 8 ein elektrischer Strom, so werden die Kaltleiter 5 bis 8 dadurch erhitzt. Die so erzeugte Wärme kann einer Speise für eine Zubereitung zugeführt werden.

In der Figur 1 werden vier elektrische Kaltleiter 5 bis 8 gezeigt. Es können aber auch mehr als vier elektrische Kaltleiter oder weniger als vier elektrische Kaltleiter vorgesehen sein.

Die Kaltleiter 5, 6, 7, 8 sind elektrisch parallel geschaltet. Die ersten Enden der Kaltleiter 5, 6, 7, 8 sind daher durch einen ersten elektrischen Verbindungsleiter 9 elektrisch miteinander verbunden, und die zweiten Enden der Kaltleiter 5, 6, 7, 8 sind durch einen zweiten elektrischen Verbindungsleiter 10 elektrisch miteinander verbunden. Der erste elektrische Verbindungsleiter 9 ist mit dem einen elektrischen Anschluss 3 elektrisch verbunden. Der zweite elektrische Verbindungsleiter 10 ist mit dem anderen elektrischen Anschluss 4 elektrisch verbunden.

Die elektrisch parallel geschalteten Kaltleiter 5 bis 8 sind durch elektrische Brücken 11 bis 17 elektrisch miteinander verbunden. Die elektrischen Brücken 11 bis 17 können ebenfalls vollständig oder überwiegend aus einem Metall wie Kupfer, Aluminium oder Eisen bestehen.

Ist die Heizplatte 1 an eine Stromquelle angeschlossen und fließt ein elektrischer Strom durch die Kaltleiter 5 bis 8, so wird dadurch die Heizplatte 1 erhitzt. Die parallel geschalteten elektrischen Kaltleiter 5 bis 8 sind also Widerstandsheizleiter für ein Erhitzen einer Speise. Durch das Erhitzen steigt der elektrische Widerstand der Kaltleiter 5 bis 8. Gibt es nun einen Bereich 18, der sich stärker erhitzt als daran angrenzende erhitzte Bereiche, so werden die davon betroffen Abschnitte der Kaltleiter stärker erhitzt. Im Fall der Figur 1 handelt sich um Abschnitte 19, 20 der beiden außen liegenden Kaltleiter 5 und 6, die zwischen den elektrischen Brücken 12 und 13 liegen. Daher erhöht sich temperaturbedingt in diesen Abschnitten 19 und 20 der elektrische Widerstand stärker im Vergleich zu dem elektrischen Widerstand bei den benachbarten Abschnitten 21 und 22. Hierdurch wird bewirkt, dass elektrischer Strom beispielsweise vom elektrischen Anschluss 3 kommend über die Brücke 12 zu den Abschnitten 21 und 22 fließen wird. Nach Passieren der Abschnitte 21 und 22 wird elektrischer Strom durch die Brücke 13 zurück zu den beiden Kaltleitern 5 und 6 fließen. Es wird so also die Heizleistung in dem Bereich 18 abgesenkt, der sich übermäßig stark erhitzt hat. Zwar werden dann die Abschnitte 21 und 22 mehr Wärme als vorgesehen produzieren. Insgesamt ergibt sich aber eine günstigere Verteilung der durch die Kaltleiter 5 bis 8 erzeugten Wärme.

Ein lokal stärker erhitzter Bereich 18 kann beispielsweise auftreten, weil Wärme lokal im verminderten Umfang zu einer Speise abtransportiert werden kann und daher ein Wärmestau auftritt.

Die elektrisch parallel geschalteten Kaltleiter 5 bis 8 können sich innerhalb der Platte 2 befinden, also in die Platte 2 integriert sein. Die elektrisch parallel geschalteten Kaltleiter 5 bis 8 können an der Unterseite der Platte 2 angebracht sein. Wird eine Speise zubereitet, so befindet sich diese dann oberhalb der Oberseite der Platte 2.

Das Material der Brücken 11 bis 17 kann vorteilhaft so ausgesucht sein, dass der Temperaturkoeffizient der elektrischen Brücken 11 bis 17 kleiner ist als der Temperaturkoeffizient der parallel geschalteten elektrischen Kaltleiter 5 bis 8. Der Temperaturkoeffizient der elektrischen Brücken 11 bis 17 kann aber auch Null sein oder kleiner als Null sein.

Der elektrische Widerstand einer elektrischen jeden Brücke 11 bis 17 kann vorteilhaft kleiner als der elektrische Widerstand eines Abschnitts 19, 20, 21, 22 eines elektrischen Kaltleiters 5, 6, 7, 8 sein, der sich zwischen zwei benachbarten elektrischen Brücken 12, 13 befindet.

Im Fall der Figur 1 verlaufen die parallel geschalteten elektrischen Kaltleiter 5 bis 8 kreisförmig sowie parallel zueinander, um die dafür vorgesehene Oberseite der Platte 2 möglichst gleichmäßig erhitzen zu können. Die parallel geschalteten elektrischen Kaltleiter 5 bis 7 verlaufen also entlang einer Kreisbahn. Die Abstände zwischen den parallel geschalteten elektrischen Kaltleitern 5 bis 8 sind im Fall der Figur 1 gleich groß.

Der Querschnitt der elektrischen Kaltleiter 5 bis 8 kann wie in der Figur 1 schematisch angedeutet von außen nach innen abnehmen, um so günstig verteilt Wärme erzeugen zu können. Der Querschnitt des außen liegenden Kaltleiters 5 ist also größer als der Querschnitt des daran angrenzenden Kaltleiters 6. Der Querschnitt des Kaltleiters 6 ist größer als der Querschnitt des anderen daran angrenzenden Kaltleiters 7. Der Querschnitt des Kaltleiters 7 ist größer als der Querschnitt des anderen daran angrenzenden Kaltleiters 8.

Die elektrischen Brücken 11 bis 17 weisen im Fall der Figur 1 untereinander gleiche Abstände auf. Die Abstände zwischen elektrischen Verbindungsleitern 9, 10 einerseits und den benachbarten Brücken 11, 17 andererseits sind gleich groß wie ein jeder Abstand zwischen zwei benachbarten Brücken 11 bis 17.

In der Figur 2 wird eine zweite Ausführungsform der Erfindung gezeigt. Diese unterscheidet sich von der Ausführungsform der Figur 1 dadurch, dass zwar die Querschnitte der elektrischen Kaltleiter 5 bis 8 gleich groß sind, dafür aber die Kaltleiter 5 bis 8 gleich oder zumindest ähnlich lang sind. Dies wird durch unterschiedlich lange Schlaufen 23 bis 25 erreicht, also durch eine Abweichung vom ansonsten kreisförmigen Verlauf der Kaltleiter 5 bis 8. Der außen liegende Kaltleiter 5 weist keine Schlaufe auf. Der benachbarte Kaltleiter 6 weist eine vergleichsweise kurze Schlaufe 23 auf. Der nächste Kaltleiter 7 weist eine Schlaufe 24 mit mittlerer Länge auf. Der innenliegende Kaltleiter 8 weist eine Schlaufe 25 mit der größten Länge auf. Da die überwiegend kreisförmig verlaufenden Kaltleiter 5 bis 8 aufgrund der Schlaufen 23 bis 25 gleich lang oder zumindest ähnlich lang sind und auch ansonsten übereinstimmen, sind die elektrischen Widerstände der Kaltleiter 5 bis 8 gleich groß oder zumindest ähnlich. Pro Längeneinheit erzeugt damit ein jeder Kaltleiter die gleiche Wärmeleistung oder zumindest eine ähnliche Wärmeleistung bei gleicher Temperatur. Dies trägt dazu bei, eine gewünschte Fläche gleichmäßig beheizen zu können, um gute Kochergebnisse erzielen zu können.

Die Schlaufen 23 bis 25 müssen nicht in der gleichen Ebene wie die übrigen Abschnitte der Kaltleiter 5 bis 8 liegen. Diese können also beispielsweise von der Unterseite der Platte 2 abstehen, um nicht im Bereich der Schlaufen 23 bis 25 eine oberhalb davon befindliche Speise während einer Zubereitung lokal zu überhitzen.

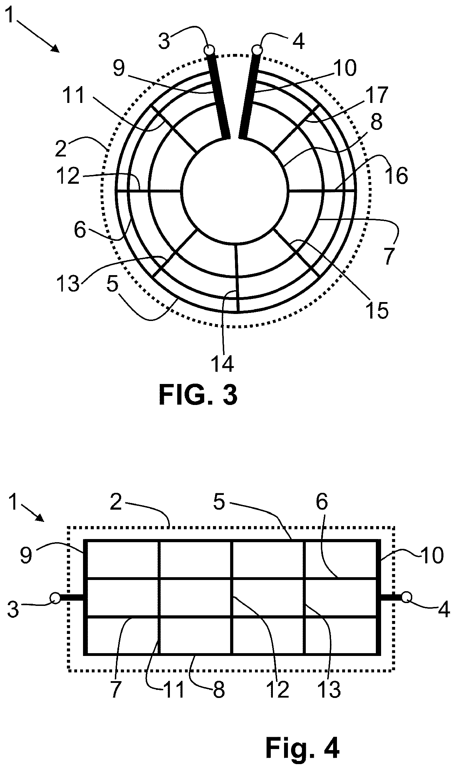

In der Figur 3 wird eine dritte Ausführungsform der Erfindung gezeigt. Diese unterscheidet sich von der Ausführungsform der Figur 1 dadurch, dass die Querschnitte der ansonsten gleichen elektrischen Kaltleiter 5 bis 8 gleich groß sind. Der Abstand zwischen den Kaltleitern 5 bis 8 nimmt jedoch von außen nach innen zu. So ist der Abstand zwischen den beiden äußeren Kaltleitern 5 und 6 gering. Der Abstand zwischen den beiden inneren Kaltleitern 7 und 8 ist groß. Der Abstand zwischen den beiden Kaltleitern 6 und 7 weist im Vergleich zu den beiden anderen Abständen einen mittleren Wert auf. Zwar ist die Heizleistung eines Kaltleiters 5 bis 8 bezogen auf eine Längeneinheit umso geringer, je länger der jeweilige Kaltleiter 5 bis 8 ist. Dies liegt daran, weil der elektrische Widerstand mit zunehmender Länge eines Kaltleiters 5 bis 8 zunimmt. Da allerdings die Kaltleiter von innen nach außen gesehen untereinander einen kleiner werdenden Abstand aufweisen, kann die gewünschte Fläche dennoch zur Erzielung eines guten Kochergebnisses gleichmäßig erhitzt werden.

Es ist auch möglich, die in den Figuren 1 bis 3 offenbarten unterschiedlichen Maßnahmen miteinander zu kombinieren, um eine Fläche gleichmäßig beheizen zu können. Die Figuren 1 bis 3 zeigen den Fall, dass die Kaltleiter 5 bis 8 fast vollständig kreisförmig verlaufen. Diese können aber auch lediglich in etwa halbkreisförmig verlaufen und mit weiteren in etwa halbkreisförmig verlaufenden Kaltleitern nebst Brücken und elektrischen Anschlüssen zusammengesetzt sein, so dass eine kreisförmige Fläche gleichmäßig oder zumindest im Wesentlichen gleichmäßig erhitzt werden kann.

Die Figur 4 zeigt den Fall einer rechteckigen Platte 2, die durch Kaltleiter 5 bis 8 beheizt werden kann. Ein jeder Kaltleiter 5 bis 8 ist gleich beschaffen und verläuft geradlinig parallel zu einer Randseite der Platte 2. Untereinander weisen die Kaltleiter 5 bis 8 gleiche Abstände auf. Es sind drei Brücken 11, 12 und 13 vorhanden, die die Kaltleiter 5 bis 8 untereinander elektrisch verbinden. Die Brücken 11, 12 und 13 weisen untereinander gleiche Abstände auf. Die Abstände zwischen einem elektrischen Verbindungsleiter 9, 10 und der jeweils benachbarten Brücke 11 bzw. 13 sind ebenfalls wie in der Figur 4 gezeigt entsprechend gleich.

Eine solche Platte 2 kann beispielsweise eine Seitenwand eines Backofens sein, über die der Innenraum des Backofens beheizt werden kann.

## Patentansprüche

1. Speisenzubereitungsgerät (1) mit einer elektrischen Heizeinrichtung, die zumindest zwei elektrische Kaltleiter (5, 6, 7, 8) für ein Erhitzen einer Speise in einem Speisenzubereitungsraum umfasst, wobei die elektrischen Kaltleiter (5, 6, 7, 8) elektrisch parallel geschaltet sind, wobei die parallel geschalteten Kaltleiter (5, 6, 7, 8) durch ein oder mehrere elektrische Brücken (11 bis 17) miteinander elektrisch verbunden sind, **dadurch gekennzeichnet, dass** die elektrischen Kaltleiter (5, 6, 7, 8) länger als die Brücken (11 bis 17) sind.

2. Speisenzubereitungsgerät (1) nach dem vorhergehenden Anspruch, **dadurch gekennzeichnet, dass** die elektrisch parallel geschalteten Kaltleiter (5, 6, 7, 8) in einer Platte (2) oder an der Unterseite einer Platte (2) angeordnet sind.

3. Speisenzubereitungsgerät (1) nach einem der vorhergehenden Ansprüche, **dadurch gekennzeichnet, dass** der Temperaturkoeffizient einer elektrischen Brücke (11 bis 17) kleiner ist als der Temperaturkoeffizient von parallel geschalteten elektrischen Kaltleitern (5, 6, 7, 8) oder dass der Temperaturkoeffizient einer elektrischen Brücke (11 bis 17) kleiner oder gleich 0 ist.

4. Speisenzubereitungsgerät (1) nach einem der vorhergehenden Ansprüche, **dadurch gekennzeichnet, dass** der elektrische Widerstand einer elektrischen Brücke (11 bis 17) kleiner ist als der elektrische Widerstand eines Abschnitts (19, 20, 21, 22) eines elektrischen Kaltleiters (5, 6, 7, 8) zwischen der elektrischen Brücke (12) und einer benachbarten elektrischen Brücke (13).

5. Speisenzubereitungsgerät (1) nach einem der vorhergehenden Ansprüche, **dadurch gekennzeichnet, dass** die elektrische Heizeinrichtung wenigstens drei oder vier parallel geschaltete elektrische Kaltleiter (5, 6, 7, 8) umfasst.

6. Speisenzubereitungsgerät (1) nach einem der vorhergehenden Ansprüche, **dadurch gekennzeichnet, dass** die parallel geschalteten elektrischen Kaltleiter (5, 6, 7, 8) Widerstandsheizleiter für ein Erhitzen einer Speise sind.

7. Speisenzubereitungsgerät (1) nach einem der vorhergehenden Ansprüche, **dadurch gekennzeichnet, dass** die parallel geschalteten elektrischen Kaltleiter (5, 6, 7, 8) parallel zueinander verlaufen.

8. Speisenzubereitungsgerät (1) nach einem der vorhergehenden Ansprüche, **dadurch gekennzeichnet, dass** die elektrischen Widerstände der parallel geschalteten elektrischen Kaltleiter (5, 6, 7, 8) bei gleicher Temperatur gleich groß sind.

9. Speisenzubereitungsgerät (1) nach einem der vorhergehenden Ansprüche, **dadurch gekennzeichnet, dass** die parallel geschalteten elektrischen Kaltleiter (5, 6, 7, 8) gleich lang sind.

10. Speisenzubereitungsgerät (1) nach einem der vorhergehenden Ansprüche, **dadurch gekennzeichnet, dass** eine Mehrzahl von elektrischen Brücken (11 bis 17) vorhanden sind, die untereinander gleiche Abstände aufweisen.

11. Speisenzubereitungsgerät (1) nach einem der vorhergehenden Ansprüche, **dadurch gekennzeichnet, dass** die parallel geschalteten elektrischen Kaltleiter (5, 6, 7, 8) zumindest überwiegend entlang einer Kreisbahn verlaufen.

12. Speisenzubereitungsgerät (1) nach einem der vorhergehenden Ansprüche, **dadurch gekennzeichnet, dass** Kaltleiter (6, 7, 8) vorhanden sind, die unterschiedlich lange Schlaufen (23, 24, 25) umfassen.

13. Speisenzubereitungsgerät (1) nach einem der vorhergehenden Ansprüche, **dadurch gekennzeichnet, dass** Abstände zwischen parallel geschalteten elektrischen Kaltleitern (5, 6, 7, 8) gleich groß sind oder dass Abstände zwischen parallel geschalteten, zumindest überwiegend kreisförmig verlaufenden elektrischen Kaltleitern (5, 6, 7, 8) von innen nach außen abnehmen.

14. Speisenzubereitungsgerät (1) nach einem der vorhergehenden Ansprüche, **dadurch gekennzeichnet, dass** das Speisenzubereitungsgerät (1) eine Küchenmaschine ist, die einen Topf für ein Zubereiten einer Speise in dem Topf umfasst, ein Mixwerkzeug für ein Mischen einer Speise und/oder eine Waage für ein Ermitteln eines Gewichts einer Speise umfasst.

15. Speisenzubereitungsgerät (1) nach einem der vorhergehenden Ansprüche, **dadurch gekennzeichnet, dass** der Boden eines Kochgefäßes die elektrisch parallel geschalteten Kaltleiter (5, 6, 7, 8) umfasst.

## Claims

1. Food preparation apparatus (1) with an electrical heating device comprising at least two electrical PTC thermistors (5, 6, 7, 8) for heating a food in a food preparation space, the electrical PTC thermistors (5, 6, 7, 8) being electrically connected in parallel, the parallel-connected PTC thermistors (5, 6, 7, 8) being electrically connected to one another by one or more electrical bridges (11 to 17), **characterized in that** the electrical PTC thermistors (5, 6, 7, 8) are longer than the bridges (11 to 17).

2. Food preparation apparatus (1) according to the preceding claim, **characterized in that** the PTC thermistors (5, 6, 7, 8) electrically connected in parallel are arranged in a plate (2) or on the underside of a plate (2).

3. Food preparation apparatus (1) according to one of the preceding claims, **characterized in that** the temperature coefficient of an electrical bridge (11 to 17) is smaller than the temperature coefficient of parallel-connected electrical PTC thermistors (5, 6, 7, 8), or **in that** the temperature coefficient of an electrical bridge (11 to 17) is less than or equal to 0.

4. Food preparation apparatus (1) according to one of the preceding claims, **characterized in that** the electrical resistance of an electrical bridge (11 to 17) is smaller than the electrical resistance of a section (19, 20, 21, 22) of an electrical PTC thermistor (5, 6, 7, 8) between the electrical bridge (12) and an adjacent electrical bridge (13).

5. Food preparation apparatus (1) according to one of the preceding claims, **characterized in that** the electrical heating device comprises at least three or four electrical PTC thermistors (5, 6, 7, 8) connected in parallel.

6. Food preparation apparatus (1) according to one of the preceding claims, **characterized in that** the electrical PTC thermistors (5, 6, 7, 8) connected in parallel are resistance heating conductors for heating a food.

7. Food preparation apparatus (1) according to one of the preceding claims, **characterized in that** the electrical PTC thermistors (5, 6, 7, 8) connected in parallel run parallel to one another.

8. Food preparation apparatus (1) according to one of the preceding claims, **characterized in that** the electrical resistances of the electrical PTC thermistors (5, 6, 7, 8) connected in parallel are the same at the same temperature.

9. Food preparation apparatus (1) according to one of the preceding claims, **characterized in that** the electrical PTC thermistors (5, 6, 7, 8) connected in parallel are of equal length.

10. Food preparation apparatus (1) according to one of the preceding claims, **characterized in that** a plurality of electrical bridges (11 to 17) are present which are equally spaced apart from one anothe.

11. Food preparation apparatus (1) according to one of the preceding claims, **characterized in that** the electrical PTC thermistors (5, 6, 7, 8) connected in parallel run at least predominantly along a circular path.

12. Food preparation apparatus (1) according to one of the preceding claims, **characterized in that** PTC thermistors (6, 7, 8) are present which comprise loops (23, 24, 25) of different lengths.

13. Food preparation apparatus (1) according to one of the preceding claims, **characterized in that** distances between electrical PTC thermistors (5, 6, 7, 8) connected in parallel are equal or that distances between electrical PTC thermistors (5, 6, 7, 8) connected in parallel and running at least predominantly in a circle decrease from the inside to the outside.

14. Food preparation apparatus (1) according to one of the preceding claims, **characterized in that** the food preparation apparatus (1) is a food processor comprising a pot for preparing a food in the pot, a mixing tool for mixing a food and/or a scale for determining a weight of a food.

15. Food preparation apparatus (1) according to one of the preceding claims, **characterized in that** the bottom of a cooking vessel comprises the PTC thermistors (5, 6, 7, 8) electrically connected in parallel.

## Revendications

1. Appareil de préparation d'aliments (1) avec un dispositif de chauffage électrique comprenant au moins deux conducteurs électriques froids (5, 6, 7, 8) pour chauffer un aliment dans un espace de préparation d'aliments, dans lequel les conducteurs électriques froids (5, 6, 7, 8) sont connectés électriquement en parallèle, où les conducteurs électriques froids (5, 6, 7, 8) connectés en parallèle sont connectés électriquement entre eux par un ou plusieurs ponts électriques (11 à 17), **caractérisé en ce que** les conducteurs électriques froids (5, 6, 7, 8) sont plus longs que les ponts (11 à 17).

2. Appareil de préparation d'aliments (1) selon la revendication précédente, **caractérisé en ce que** les conducteurs électriques froids (5, 6, 7, 8) connectés en parallèle sont disposées dans une plaque (2) ou sur la face inférieure d'une plaque (2).

3. Appareil de préparation d'aliments (1) selon l'une des revendications précédentes, **caractérisé en ce que** le coefficient de température d'un pont électrique (11 à 17) est inférieur au coefficient de température des conducteurs électriques froids (5, 6, 7, 8) connectés en parallèle ou **en ce que** le coefficient de température d'un pont électrique (11 à 17) est inférieur ou égal à 0.

4. Appareil de préparation d'aliments (1) selon l'une des revendications précédentes, **caractérisé en ce que** la résistance électrique d'un pont électrique (11 à 17) est inférieure à la résistance électrique d'une section (19, 20, 21, 22) d'un conducteur électriques froid (5, 6, 7, 8) entre le pont électrique (12) et un pont électrique adjacent (13).

5. Appareil de préparation d'aliments (1) selon l'une des revendications précédentes, **caractérisé en ce que** le dispositif de chauffage électrique comprend au moins trois ou quatre conducteurs électriques froids (5, 6, 7, 8) connectés en parallèle.

6. Appareil de préparation d'aliments (1) selon l'une des revendications précédentes, **caractérisé en ce que** les conducteurs électriques froids (5, 6, 7, 8) connectés en parallèle sont des conducteurs chauffants à résistance pour un chauffage d'un aliment.

7. Appareil de préparation d'aliments (1) selon l'une des revendications précédentes, **caractérisé en ce que** les conducteurs électriques froids (5, 6, 7, 8) connectés en parallèle sont parallèles entre eux.

8. Appareil de préparation d'aliments (1) selon l'une des revendications précédentes, **caractérisé en ce que** les résistances électriques des conducteurs électriques froids (5, 6, 7, 8) connectés en parallèle sont de même valeur à la même température.

9. Appareil de préparation d'aliments (1) selon l'une des revendications précédentes, **caractérisé en ce que** les conducteurs électriques froids (5, 6, 7, 8) connectés en parallèle sont de même longueur.

10. Appareil de préparation d'aliments (1) selon l'une des revendications précédentes, **caractérisé en ce qu'**il existe une pluralité de ponts électriques (11 à 17) qui présentent des distances égales entre eux.

11. Appareil de préparation d'aliments (1) selon l'une des revendications précédentes, **caractérisé en ce que** les conducteurs électriques froids (5, 6, 7, 8) connectés en parallèle s'étendent au moins principalement le long d'une trajectoire circulaire.

12. Appareil de préparation d'aliments (1) selon l'une des revendications précédentes, **caractérisé en ce qu'**il existe des conducteurs froids (6, 7, 8) qui comprennent des boucles (23, 24, 25) de longueurs différentes.

13. Appareil de préparation d'aliments (1) selon l'une des revendications précédentes, **caractérisé en ce que** des distances entre des conducteurs électriques froids (5, 6, 7, 8) connectés en parallèle sont égales ou **en ce que** les distances entre des conducteurs électriques froids (5, 6, 7, 8) connectés en parallèle, s'étendant au moins principalement de manière circulaire diminuent de l'intérieur vers l'extérieur.

14. Appareil de préparation d'aliments (1) selon l'une des revendications précédentes, **caractérisé en ce que** l'appareil de préparation d'aliments (1) est un robot de cuisine comprenant une casserole pour préparer un aliment dans la casserole, un outil de mélange pour mélanger un aliment et/ou une balance pour déterminer un poids d'un aliment.

15. Appareil de préparation d'aliments (1) selon l'une quelconque des revendications précédentes, **caractérisé en ce que** le fond d'un récipient de cuisson comprend les conducteurs froids (5, 6, 7, 8) connectés électriquement en parallèle.
